# EUROPEAN PATENT APPLICATION

(11) **EP 4 183 660 A1**
(43) Date of publication of application: **24.05.2023**
(21) Application number: 21846756.1
(22) Date of filing: 20.04.2021
(51) Int. Cl.: B61L 25/02, B61L 23/00, G06T 7/70

(54) **RAILWAY LINE INFORMATION ACQUISITION DEVICE AND RAILWAY LINE INFORMATION ACQUISITION METHOD**

(30) Priority: 20.07.2020 JP 2020123798
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: FUTAGAMI Takuya, Kawasaki-shi, Kanagawa 212-0013 (JP); TAKAHASHI Yusuke, Kawasaki-shi, Kanagawa 212-0013 (JP); OODAKE Tatsuya, Kawasaki-shi, Kanagawa 212-0013 (JP); KOBAYASHI Hiroyuki, Kawasaki-shi, Kanagawa 212-0013 (JP); YAMASAKI Yoshiaki, Kawasaki-shi, Kanagawa 212-0013 (JP); MASHIMA Yoshiki, Kawasaki-shi, Kanagawa 212-0013 (JP); SEGAWA Taisei, Kawasaki-shi, Kanagawa 212-0013 (JP); KATO Noriyasu, Kawasaki-shi, Kanagawa 212-0013 (JP); HATTORI Yohei, Kawasaki-shi, Kanagawa 212-0013 (JP)
(74) Representative: AWA Sweden AB
(86) International application number: PCT/JP2021/015949
(87) International publication number: WO 2022/018918

(57) **Abstract**

A railroad-line information acquiring apparatus according to the present embodiment includes an image acquirer, a line information acquirer, a transformer, and a comparator. The image acquirer acquires a captured image in a traveling direction of a railroad vehicle. The line information acquirer acquires location information of a first line in a direction in which the railroad vehicle travels, on the basis of a location of the railroad vehicle. The transformer transforms the captured image and the first line into a common coordinate system. The comparator acquires location information of the first line corresponding to a second line in the captured image, on the common coordinate system.

## Description

### Field

Embodiments of the present invention relate to a railroad-line information acquiring apparatus and a railroad-line information acquiring method.

### Background

A monitoring method of monitoring obstacles ahead using images captured by a camera mounted on a railroad vehicle is generally known. This monitoring method determines whether an object located ahead is an obstacle that the vehicle may hit. Therefore, processing of detecting lines on which the vehicle is supposed to travel in images is required. Since the braking distance for the railroad vehicle to stop is long, detecting farther lines with a high accuracy and at a high speed is demanded.

However, lines are not clearly imaged depending on the weather, the time period, and the environments (such as a tunnel) and there is a risk that detecting lines in the distance with a high accuracy becomes difficult.

### Citation List

### Patent Literatures

Patent Literature 1: Japanese Patent Application Laid-open No. 2016-172824
Patent Literature 2: Japanese Patent Application Laid-open No. 2019-218022

### Non Patent Literature

Non Patent Literature 1: Conference: 2016 12th World Congress on Intelligent Control and Automation (WCICA), "Geometry Constraints-based Visual Rail Track Extraction"

### Summary

### Technical Problem

To provide a railroad-line information acquiring apparatus and a railroad-line information acquiring method that can detect location information of lines with a higher accuracy.

### Solution to Problem

A railroad-line information acquiring apparatus according to the present embodiment includes an image acquirer, a line information acquirer, a transformer, and a comparator. The image acquirer acquires a captured image in a traveling direction of a railroad vehicle. The line information acquirer acquires location information of a first line in a direction in which the railroad vehicle travels, on the basis of a location of the railroad vehicle. The transformer transforms the captured image and the first line into a common coordinate system. The comparator acquires location information of the first line corresponding to a second line in the captured image, on the common coordinate system.

### Brief Description of Drawings

[FIG. 1] FIG. 1 is a block diagram illustrating a configuration example of a railroad-line information acquiring apparatus.
[FIG. 2] FIG. 2 is a block diagram illustrating a detailed configuration example of the railroad-line information acquiring apparatus according to the present embodiment.
[FIG. 3] FIG. 3 is a diagram illustrating lines shown on a horizontal plane.
[FIG. 4] FIG. 4 is a diagram illustrating a relation among the latitude and longitude at a midpoint between lines, and a set point.
[FIG. 5] FIG. 5 is a diagram schematically illustrating locations of the set points set on the lines.
[FIG. 6] FIG. 6 is a diagram for schematically explaining homography matrixes for the set points.
[FIG. 7] FIG. 7 is a diagram illustrating an example of coordinate transformation using the homography matrixes corresponding to a set point.
[FIG. 8] FIG. 8 is a diagram illustrating an example of templates generated by coordinate transformation by a line coordinate transformer.
[FIG. 9] FIG. 9 is a diagram illustrating an example of processing of a line output portion.
[FIG. 10] FIG. 10 is a diagram illustrating an example of processing of a current location detector.
[FIG. 11] FIG. 11 is a diagram illustrating a set point including a tongue rail.
[FIG. 12] FIG. 12 is a diagram illustrating line information obtained by transforming line information corresponding to the set point into a camera coordinate system.
[FIG. 13] FIG. 13 is a diagram illustrating an example in which a tunnel is included in an image captured by an image capturing portion.
[FIG. 14] FIG. 14 is a flowchart illustrating a flow of general processing of the railroad-line information acquiring apparatus.
[FIG. 15] FIG. 15 is a flowchart illustrating a flow of detailed processing of line detecting processing.
[FIG. 16] FIG. 16 is a flowchart illustrating a flow of detailed processing of current location correcting processing.
[FIG. 17] FIG. 17 is a flowchart illustrating a flow of detailed processing of imaging parameter correcting processing.
[FIG. 18] FIG. 18 is a block diagram illustrating a configuration of a railroad-line information acquiring apparatus according to a second embodiment.
[FIG. 19] FIG. 19 is a diagram illustrating inverse transformation matrixes of homography matrixes corresponding to the set point.
[FIG. 20] FIG. 20 is a diagram illustrating an example of inverse templates that are generated by inverse coordinate transformation by an image projector.
[FIG. 21] FIG. 21 is a diagram illustrating an example of processing of the line output portion.
[FIG. 22] FIG. 22 is a flowchart illustrating a flow of detailed processing of current location detecting processing according to the second embodiment.
[FIG. 23] FIG. 23 is a flowchart illustrating a flow of detailed processing of line detecting processing according to a third embodiment.
[FIG. 24] FIG. 24 is a diagram schematically illustrating an example in which a railroad vehicle travels on a horizontal face and a tilted face.

### Description of Embodiments

Embodiments of the present invention will now be explained below with reference to the drawings. In the drawings attached to the present specification, the scale, the aspect ratio, and the like of the respective constituent elements are changed from those of actual products and illustrated in an exaggerated manner as appropriate for convenience of illustration and understanding.

### (First embodiment)

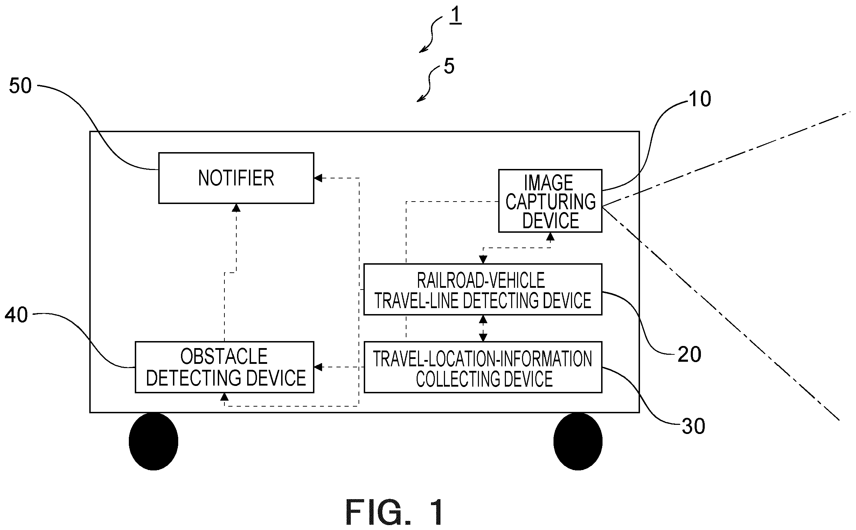

FIG. 1 is a block diagram illustrating a configuration example of a railroad-vehicle travel-line acquiring system 1 according to the present embodiment. As illustrated in FIG. 1, the railroad-vehicle travel-line acquiring system 1 according to the present embodiment is a system that can acquire location information of railroad vehicle travel lines and includes an image capturing device 10 mounted on a railroad vehicle 5, a railroad-line information acquiring apparatus 20, a travel-location-information collecting device 30, an obstacle detecting device 40, and a notifier 50. The railroad vehicle 5 travels on lines being a fixed track.

The image capturing device 10 can serially capture R, G, and B images as a captured moving image. The image capturing device 10 is fixed, for example, to a front portion of the railroad vehicle 5. Accordingly, images constituting a captured moving image captured during traveling of the railroad vehicle 5 on the lines are, for example, images from the same angle and with the same imaging magnification when captured at the same location. These images are stored in a storage portion 204 which will be described later.

The railroad-line information acquiring apparatus 20 checks the captured images that are captured by the image capturing device 10 against location information of lines, detects location information of the lines in the captured images, and outputs the detected information. Details of the railroad-line information acquiring apparatus 20 will be described later.

The travel-location-information collecting device 30 acquires the current location of the railroad vehicle 5 and outputs information of a predetermined line range in the traveling direction of the railroad vehicle 5 for the current location.

The obstacle detecting device 40 detects obstacles that will impede the railroad vehicle 5 during traveling, on the basis of the captured images captured by the image capturing device 10 and the lines detected by the railroad-line information acquiring apparatus 20.

The notifier 50 displays various types of information along with the captured images captured by the image capturing device 10. The notifier 50 also notifies, for example, a central monitoring room of information related to the obstacles detected by the obstacle detecting device 40.

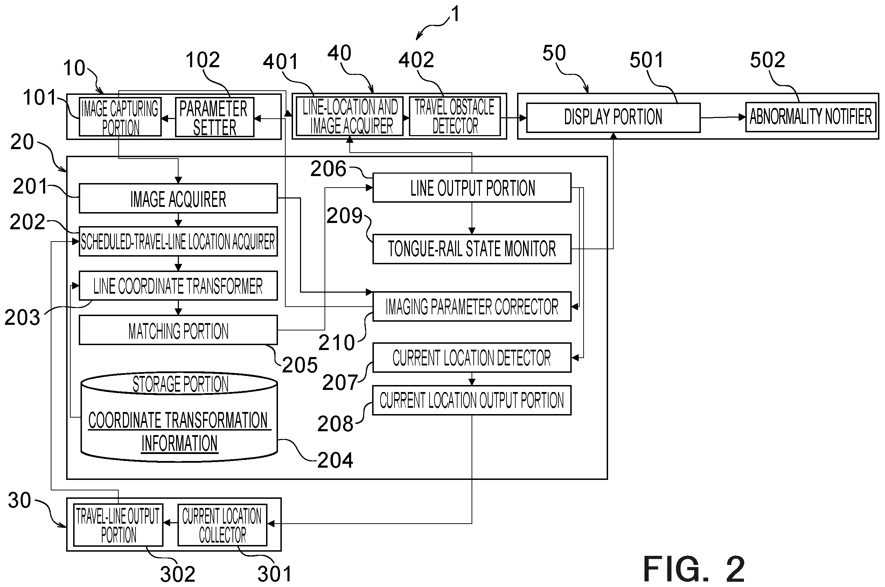

FIG. 2 is a block diagram illustrating a detailed configuration example of the railroad-vehicle travel-line acquiring system 1 according to the present embodiment. As illustrated in FIG. 2, the image capturing device 10 includes an image capturing portion 101, and a parameter setter 102. The railroad-line information acquiring apparatus 20 includes an image acquirer 201, a scheduled-travel-line location acquirer 202, a line coordinate transformer 203, the storage portion 204, a matching portion 205, a line output portion 206, a current location detector 207, a current location output portion 208, a tongue-rail state monitor 209, and an imaging parameter corrector 210. The travel-location-information collecting device 30 includes a current location collector 301, and a travel-line output portion 302. The obstacle detecting device 40 includes a line-location and image acquirer 401, and a travel obstacle detector 402. The notifier 50 includes a display portion 501, and an abnormality notifier 502.

As illustrated in FIG. 2, the image capturing portion 101 of the image capturing device 10 is, for example, a camera and can control exposure. The parameter setter 102 sets imaging parameters of the image capturing portion 101. The parameter setter 102 can also perform gradation processing for images captured by the image capturing portion 101.

The image acquirer 201 of the railroad-line information acquiring apparatus 20 sequentially acquires captured images in the traveling direction of the railroad vehicle 5 from the image capturing portion 101. The scheduled-travel-line location acquirer 202 acquires location information of lines in the direction in which the railroad vehicle 5 travels from the travel-location-information collecting device 30. The railroad-line information acquiring apparatus 20 is configured, for example, to include a CPU (Central Processing Unit). The storage portion 204 has stored therein various programs to enable a monitoring operation to be performed. Accordingly, the railroad-line information acquiring apparatus 20 configures components by executing, for example, the programs stored in the storage portion 204.

The line coordinate transformer 203 transforms the captured image acquired by the image acquirer 20 and the location information of lines into a common coordinate system. For example, the line coordinate transformer 203 transforms coordinates of the lines indicated by the location information into a camera coordinate system of the image capturing portion 101 that has captured the captured image. Details of the line coordinate transformer 203 will be described later. The line coordinate transformer 203 according to the present embodiment corresponds to a transformer.

The storage portion 204 is constituted of, for example, an HDD (Hard Disk Drive) or an SSD (Solid State Drive). The storage portion 204 has stored therein the location information of lines as a monitoring target, a coordinate transformation matrix for the lines as the monitoring target, various types of information of the image capturing portion 101, for example, the direction of the optical axis of an imaging optical system, and the imaging magnification, as coordinate transformation information.

The matching portion 205 acquires location information of lines corresponding to the lines in the captured image, on the common coordinate system. Details of the matching portion 205 will also be described later. The matching portion 205 according to the present embodiment corresponds to a comparator.

The line output portion 206 outputs the location information of the lines coinciding with the lines in the captured image compared by the matching portion 205.

The current location detector 207 calculates a current location of the railroad vehicle 5 using the location information of the lines acquired by the matching portion 205 and the information of the imaging optical system of the image capturing portion 101. Details of the current location detector 207 will also be described later. The current-location output portion 208 outputs the current location detected by the current location detector 207.

The tongue-rail state monitor 209 monitors the state of tongue rails at line branch parts and checks the state against the travel line location information to confirm consistency in the tongue rail state. Details of the tongue-rail state monitor 209 will also be described later.

The imaging parameter corrector 210 corrects imaging parameters in the traveling direction of the railroad vehicle 5 using the location information of the lines acquired by the matching portion 205. Details of the imaging parameter corrector 210 will also be described later.

The current location collector 301 of the travel-location-information collecting device 30 acquires the current location of the railroad vehicle 5 output by the current location detector 207. The current location collector 301 also acquires information of the current location of the railroad vehicle 5 based on the GNSS (Global Navigation Satellite System). Accordingly, the travel-location-information collecting device 30 outputs a signal including information of the current location of the railroad vehicle 5 to the travel-line output portion 302 complementarily using the current location of the railroad vehicle 5 output by the current location detector 207 and the current location of the railroad vehicle 5 based on the GNSS.

The travel-line output portion 302 outputs information of line locations in a predetermined range in the traveling direction of the railroad vehicle 5 on the basis of the current location of the railroad vehicle 5 acquired by the current location collector 301. The predetermined range is, for example, a range of 50 to 200 meters ahead in the traveling direction. The range of 50 to 200 meters is an example and the predetermined range is not limited to this range.

The line-location and image acquirer 401 of the obstacle detecting device 40 acquires the captured image captured by the image capturing portion 101 and the location information of lines in the captured image compared by the matching portion 205.

The travel obstacle detector 402 detects obstacles that will impede the traveling of the railroad vehicle 5 on the basis of the location information of the lines in the captured image. When detecting an obstacle, the travel obstacle detector 402 notifies the notifier 50 of the location of the obstacle based on the location information of the lines in the captured image.

The display portion 501 of the notifier 50 is, for example, a monitor and displays the captured image captured by the image capturing portion 101. When the travel obstacle detector 402 detects an obstacle, the display portion 501 displays a display form such as a mark indicating the location of the obstacle.

When the travel obstacle detector 402 detects an obstacle, the abnormality notifier 502 notifies the central monitoring room, or the like, of information indicating the location of the obstacle, or the like.

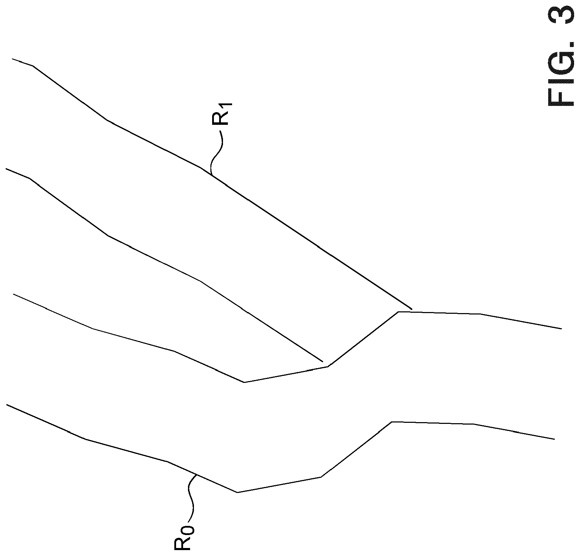

Details of the line coordinate transformer 203 are explained below with reference to FIGS. 3 to 8. FIG. 3 is a diagram illustrating lines R₀ and R₁ shown on a horizontal plane, for example, on a bird's-eye view. As illustrated in FIG. 3, the lines R₁ branch off from the lines R₀. The storage portion 204 has stored therein location information of lines in the whole range in which the railroad vehicle 5 travels, for example, represented by a geographical coordinate system (X, Y).

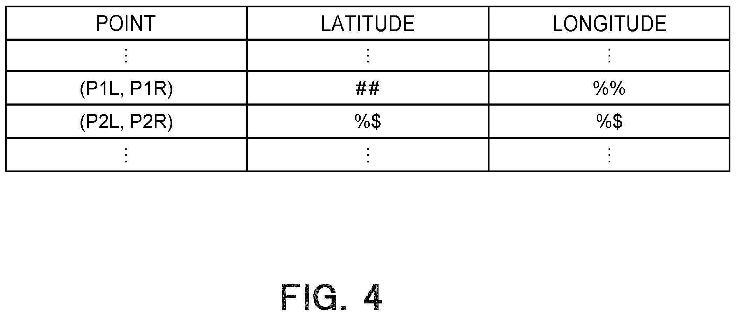

FIG. 4 is a diagram illustrating a relation among the latitude and longitude at a midpoint between lines, and the set point (PnL, PnR). As illustrated in FIG. 4, for example, the latitude and longitude at the midpoint between lines, and the set point (PnL, PnR) are stored in the storage portion 204 associated with each other. In this example, n is a natural number, L indicates a left line with respect to the traveling direction, and R indicates a right line with respect to the traveling direction. That is, PnL indicates the location of the left line and PnR indicates the location of the right line corresponding to PnL. As described later, a homography matrix H_{n,T} is associated with each of the set points (PnL, PnR) and is stored. The homography matrix H in the present embodiment is a matrix for associating the geography coordinate system (X, Y) with the camera coordinate system (x, y) of the image capturing portion 101.

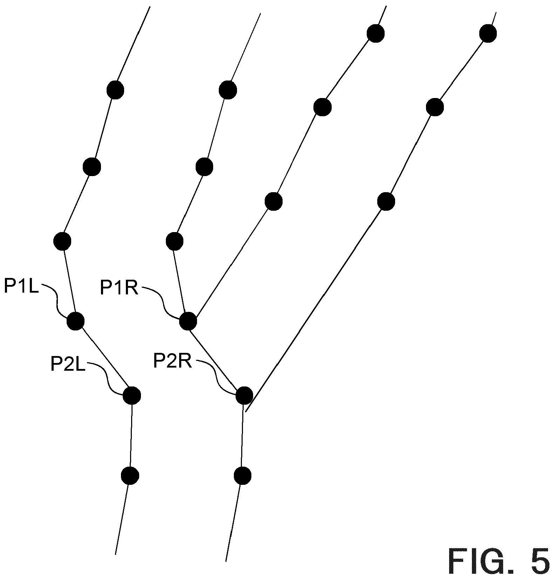

FIG. 5 is a diagram schematically illustrating locations of the set points (PnL, PnR) set on the lines R₀ and R₁. In this way, the latitude, the longitude, and the set point (PnL, PnR) are associated with each of the lines in the whole range in which the railroad vehicle 5 travels.

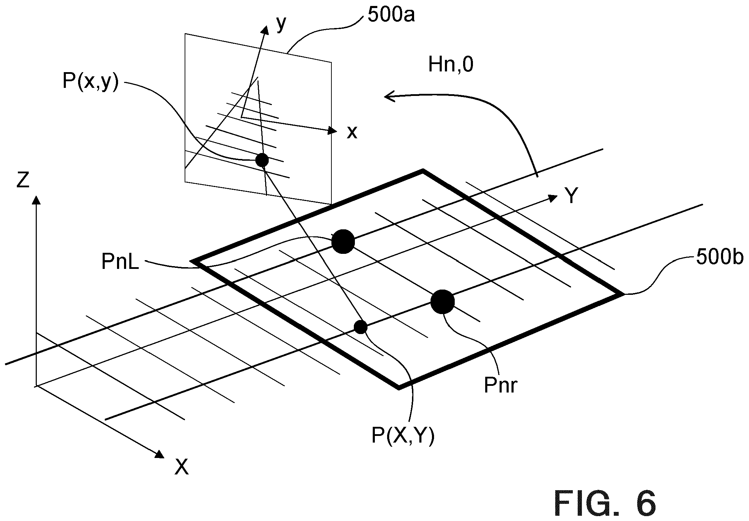

FIG. 6 is a diagram for schematically explaining the homography matrixes H_{n,T} for the set points (PnL, PnR). These homography matrixes H can be respectively computed for the set points (PnL, PnR), for example, by a technique described in Non Patent Literature 1. In this example, n in H_{n,T} indicates the set point (PnL, PnR). For example, when n=3, this indicates the set point (P3L, P3R).

An image 500a is a captured image that is captured by the image capturing portion 101 from the location of the railroad vehicle 5 supposed at the time of calculating the homography matrix H_{n,T}. An image 500b indicates a range of line information transformed with the homography matrix H_{n,T} for the set point (PnL, PnR). T indicates the distance from the set point (PnL, PnR) to the image capturing portion 101 of the railroad vehicle 5. For example, 0 (zero) indicates a reference distance from the set point (PnL, PnR) to the image capturing portion 101 of the railroad vehicle 5 and is, for example, 100 meters. For example, when T=1, the distance from the set point (PnL, PnR) to the image capturing portion 101 is 101 meters. For example, when T=5, the distance from the set point (PnL, PnR) to the image capturing portion 101 is 105 meters. Meanwhile, for example, when T=-1, the distance from the set point (PnL, PnR) to the image capturing portion 101 is 99 meters. For example, when T=-5, the distance from the set point (PnL, PnR) to the image capturing portion 101 is 95 meters. These are examples and the value of T and the corresponding distance are not limited to these examples.

As described above, the geographical coordinate system (X, Y) is set to the line information stored in the storage portion 204. The image capturing portion 101 captures images with the fixed imaging system as described above. Accordingly, the geographical coordinate system (X, Y) of a line transformed with the homography matrix H into the camera coordinates (x, y) coincides with a location indicated by the camera coordinate system of the line in the image 500a captured from the location of the railroad vehicle 5 supposed at the time of calculating the homography matrix H_{n,T}. That is, the geographical coordinate system (X, Y) of a line with coordinates transformed with the homography matrix H_{n,T} is transformed into the location coordinates (x, y) indicated by the camera coordinate system of the line in the image 500a captured from the distance corresponding to T.

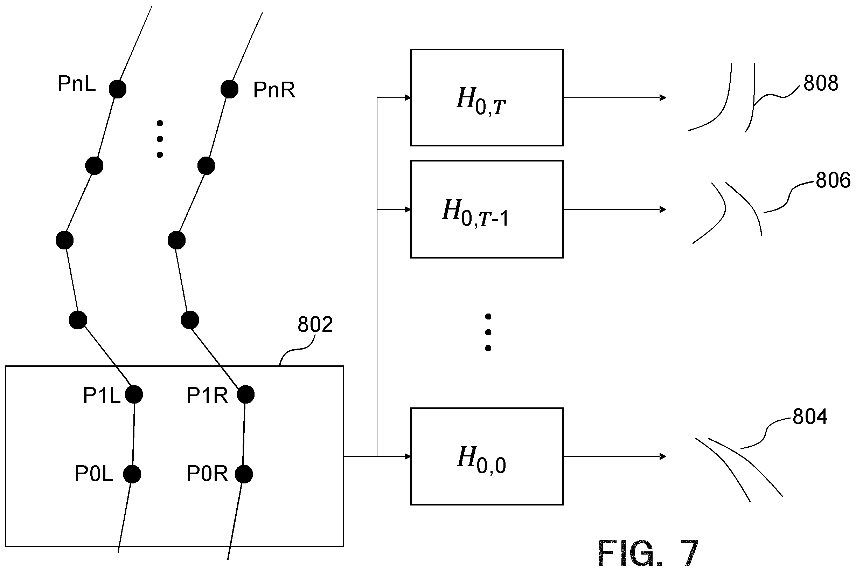

FIG. 7 is a diagram illustrating an example of coordinate transformation by the line coordinate transformer 203 using the homography matrixes H_{0,0} to H_{0,T} corresponding to the set point (POL, P0R). An image 802 is an image region corresponding to the set point (POL, P0R) and indicates line information indicated by the geographical coordinate system (X, Y). Each of images 804 to 808 indicates line information obtained by transforming the line information indicated by the geographical coordinate system (X, Y) in the image 802 into the camera coordinate system (x, y) with the associated one of the homography matrixes H_{0,0} to H_{0,T}.

More specifically, H_{0,0} indicates a homography matrix at a reference location where the distance from the set point (POL, P0R) to the image capturing portion 101 of the railroad vehicle 5 is the reference distance, for example, at a location 100 meters short of the set point (POL, P0R). Line information indicated by the camera coordinates (x, y) in the image 804 corresponds to line information obtained by transforming the line information indicated by the geographical coordinate system (X, Y) in the image 802 corresponding to the set point (POL, P0R) into camera coordinates with the homography matrix H_{0,0}. That is, the line information indicated by the camera coordinates (x, y) in the image 804 coincides with location coordinates on the camera coordinate system of lines in an image obtained by imaging a region corresponding to the image 802 with the image capturing portion 101 at the reference location.

Similarly, line information indicated by the camera coordinates (x, y) in the image 806 corresponds to line information obtained by transforming the line information indicated by the geographical coordinate system (X, Y) in the image 802 corresponding to the set point (POL, P0R) into camera coordinates with the homography matrix H_{0,T-1}. That is, the line information indicated by the camera coordinates (x, y) in the image 806 coincides with location coordinates on the camera coordinate system of lines in an image obtained by imaging a region corresponding to the image 802 with the image capturing portion 101 at a location indicated by T-1. Similarly, line information indicated by the camera coordinates (x, y) in the image 808 corresponds to line information obtained by transforming the line information indicated by the geographical coordinate system (X, Y) in the image 802 corresponding to the set point (POL, P0R) into camera coordinates with the homography matrix H_{0,T}. That is, the line information indicated by the camera coordinates (x, y) in the image 808 coincides with location coordinates on the camera coordinate system of lines in an image obtained by imaging a region corresponding to the image 802 with the image capturing portion 101 at a location indicated by T. In this way, the line coordinate transformer 203 transforms line information indicated by the geographical coordinate system (X, Y) in the image 802 corresponding to the set point (POL, P0R) with the associated homography matrix H_{0,T}. In this example, T is an integer in a range of -n≤T≤m set according to imaging situations, where n and m are natural numbers.

Accordingly, the line coordinate transformer 203 can transform a region corresponding to the image 802 into location coordinates of lines on the camera coordinate system captured from each of a plurality of imaging locations T. In the present embodiment, line information on the geographical coordinate system (X, Y) corresponding to the set point (PnL, PnR) is transformed into the camera coordinate system (x, y) with the homography matrix H_{n,T} and the resultant line information on the camera coordinate system (x, y) is referred to as "template (n, T)".

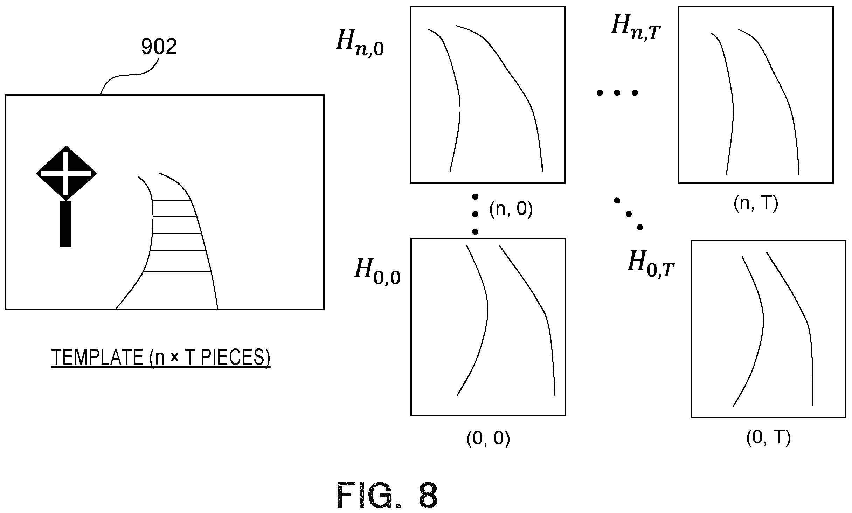

FIG. 8 is a diagram illustrating an example of templates generated by coordinate transformation by the line coordinate transformer 203. The location of the railroad vehicle 5 output from the travel-location-information collecting device 30 may include an error. Therefore, considering a range in which an error occurs, the travel-location-information collecting device 30 generates templates (0, 0) to (n, T) respectively corresponding to the set points (POL, P0R) to (PnL, PnR) in a range in which there is a possibility for the railroad vehicle 5 to capture images.

It is assumed below that the current location of the railroad vehicle 5 at a time when the captured image 902 has been captured is the reference location of the set point (POL, P0R). In this case, the line coordinate transformer 203 generates line information by transforming line information on the geographical coordinate system (X, Y) corresponding to the set point (POL, P0R) into the camera coordinate system (x, y) with the associated homography matrix H_{0,T}. Similarly, the line coordinate transformer 203 generates line information by transforming line information on the geographical coordinate system (X, Y) corresponding to each of the set points (P1L, P1R) to (PnL, PnR) into the camera coordinate system (x, y) with the associated homography matrixes H_{1,0} to H_{1,T}, respectively. The ranges of n and T are set in advance based on measurement accuracy of the current location of the railroad vehicle 5.

The matching portion 205 detects lines from the captured image 902, for example, using the templates (0, T) to (n, T) generated by the coordinate transformation with the homography matrixes H illustrated in FIG. 8. The matching portion 205 expresses, for example, the lines in the captured image 902 as line components obtained by coupling short straight lines and curved segments. The matching portion 205 selects a template most matched with the line components from the templates (0, T) to (n, T).

The line output portion 206 outputs the location information of lines in the most matched template as line location information in the captured image 902.

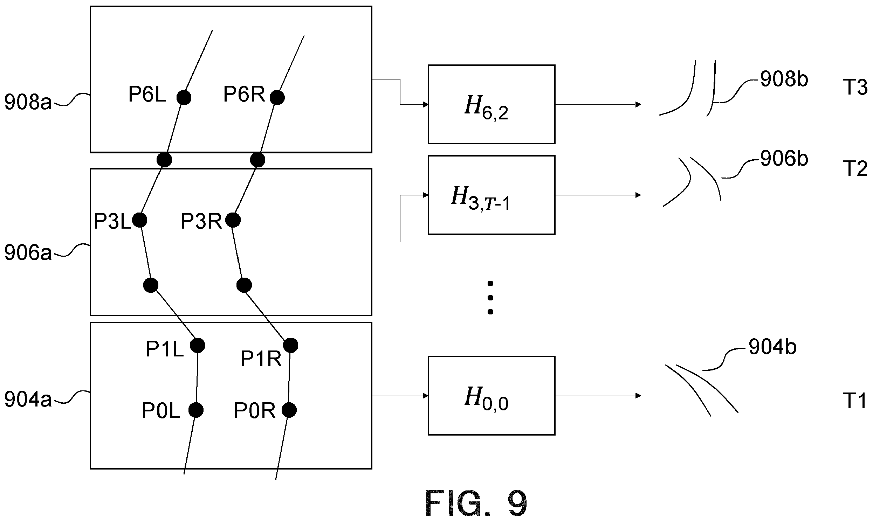

FIG. 9 is a diagram illustrating an example of processing of the line output portion 206. Images 904b to 908b indicate templates most matched with captured images that are captured at times T1 to T3, respectively. For example, the image 904b corresponds to a template generated by transforming line information 904a corresponding to the set point (POL, P0R) with the homography matrix H_{0,0}. That is, the line output portion 206 outputs line information indicated by the image 904b that has been transformed into the camera coordinate system (x, y) for the captured image captured at the time T1. Similarly, the image 906b corresponds to a template generated by transforming line information 906a corresponding to the set point (P3L, P3R) with a homography matrix H_{3,T-1}. That is, the line output portion 206 outputs line information indicated by the image 906b that has been transformed into the camera coordinate system (x, y) for the captured image captured at the time T2. Similarly, the image 908b corresponds to a template generated by transforming line information 908a corresponding to a set point (P6L, P6R) with a homography matrix H_{6,2}. That is, the line output portion 206 outputs line information indicated by the image 908b that has been transformed into the camera coordinate system (x, y) for the captured image captured at the time T3.

Since these images 904b to 908b are images generated by transforming the actual line information 904a to 908a, respectively, the line information of the camera coordinate system (x, y) output from the line output portion 206 substantially coincides with the actual line information. Therefore, the line output portion 206 can output line information corresponding to the actual lines from each of the captured images that are captured at the times T1 to T3.

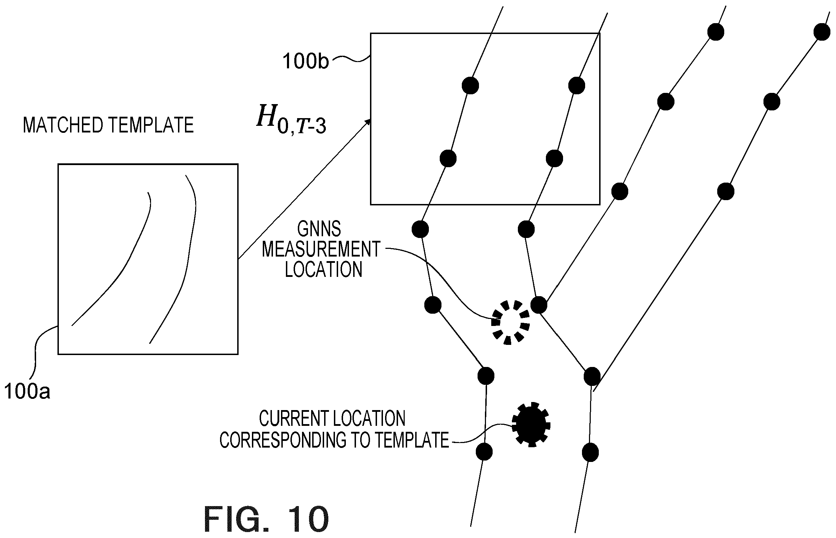

FIG. 10 is a diagram illustrating an example of processing of the current location detector 207. An image 100a indicates an image most matched with the captured image in the processing of the matching portion 205. The image 100a is an image obtained by transforming an image 100b with a homography matrix H_{0,T-3}. The homography matrix H_{0,T-3} is a homography matrix corresponding to a predetermined distance from the set point (POL, P0R) in the image 100b. That is, when the most matched image 100a is selected by the processing in the matching portion 205, the current location where the image 100a has been captured can be accurately generated from the distance information corresponding to the homography matrix H_{0,T-3} used in the generation of the image 100a. In this way, the current location detector 207 detects a location corresponding to the homography matrix H_{0,T-3} that has been used in the transformation into the most matched template in the processing of the matching portion 205 as the current location.

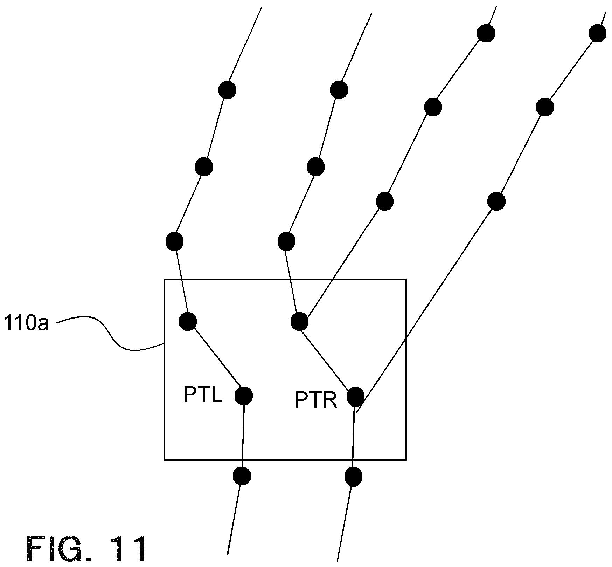

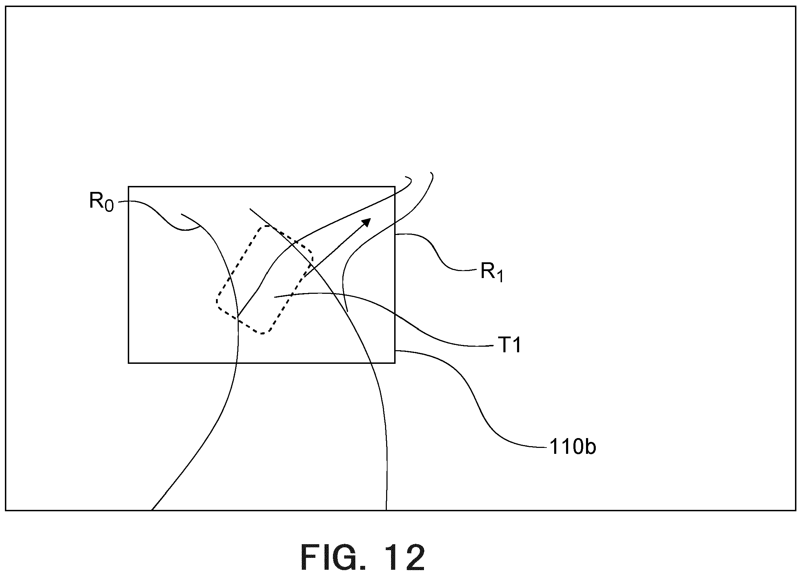

Details of the tongue-rail state monitor 209 are explained below with reference to FIGS. 11 and 12.

FIG. 11 is a diagram illustrating a set point (PTL, PTR) including a tongue rail. An image 110a is an image range corresponding to the set point (PTL, PTR).

FIG. 12 is a diagram illustrating line information obtained by transforming line information in the image 110a (see FIG. 11) corresponding to the set point (PTL, PTR) into the camera coordinate system. That is, the image 110b corresponds to the image 110a (see FIG. 11). That is, the image 110b corresponds to a template most matched in the matching portion 205.

When the set point (PTL, PTR) corresponding to the template most matched in the matching portion 205 includes a tongue rail, the tongue-rail state monitor 209 determines the state of the tongue rail. More specifically, the tongue-rail state monitor 209 analyzes, for example, image information in a captured image of an image region T1 including a branch associated with the set point (PTL, PTR) corresponding to the tongue rail (see Patent Literature 2). That is, the tongue-rail state monitor 209 identifies lines on which the railroad vehicle 5 travels by determining the on/off state of at least either of two switching parts in the tongue rail in the captured image on the basis of the image region T1 including a branch. The tongue-rail state monitor 209 acquires a signal including information related to the traveling direction, for example, from the central monitoring room. The tongue-rail state monitor 209 determines whether the traveling direction coincides with the identification result on the on/off state. When the traveling direction does not coincide with the identification result, the tongue-rail state monitor 209 notifies of abnormality in the tongue rail state via the notifier 50.

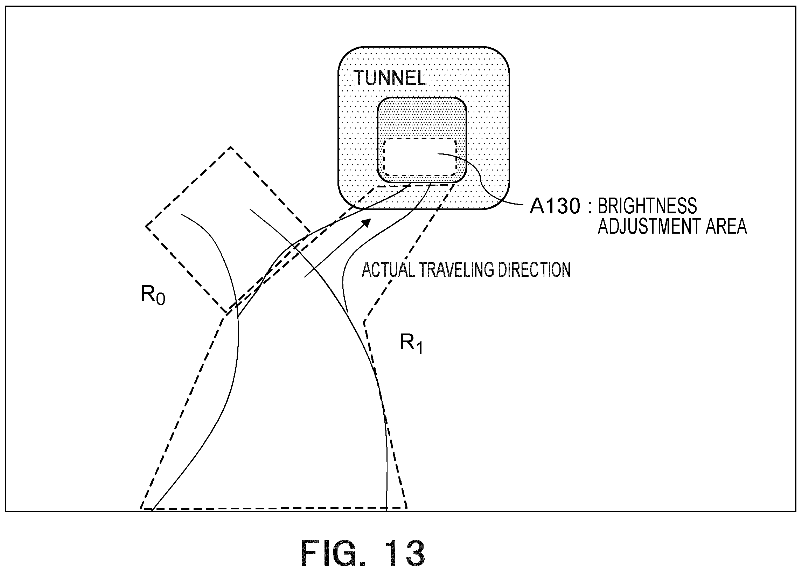

Details of the parameter corrector 210 are explained below with reference to FIG. 13. FIG. 13 is a diagram illustrating an example in which a tunnel is included in an image captured by the image capturing portion 101. Exposure of the image capturing portion 101 has a value adjusted to the brightness of outside the tunnel. Accordingly, an image in the tunnel is liable to become blocked-up shadows.

The parameter corrector 210 outputs a signal including information of parameters to the parameter setter 102 on the basis of the current location of the railroad vehicle 5 output from the current location detector 207. The storage portion 204 has also location information of the tunnel stored therein to be associated with the line information. The parameter corrector 210 determines whether a tunnel is included in an image captured by the image capturing portion 101 with respect to the current location of the railroad vehicle 5. When determining that an image of a tunnel is captured, the parameter corrector 210 outputs a parameter for decreasing the exposure to the parameter setter 102. More specifically, the parameter corrector 210 corrects the parameter to provide a predetermined contrast using the contrast of an adjustment area A130 in the tunnel as an evaluation value.

The parameter corrector 210 also acquires state monitoring information of the tongue-rail state monitor 209. When there is a tunnel on one of branched lines and there is no tunnel on the other line, the parameter corrector 210 determines whether exposure control is required for an image in the tunnel according to the traveling direction. For example, when the railroad vehicle travels toward the tunnel, the parameter corrector 210 outputs a parameter for increasing exposure to the parameter setter 102. On the other hand, even when an image of the tunnel is captured by the image capturing portion 101, the parameter corrector 210 keeps the exposure parameter when the railroad vehicle does not travel toward the tunnel. In this way, when the railroad vehicle travels toward a tunnel, the exposure can be adjusted to illuminance of the adjustment area A130 in the tunnel and obstacles in the adjustment area A130 in the tunnel can be easily checked. On the other hand, when the railroad vehicle does not travel toward the tunnel, the exposure parameter is maintained even when an image of the tunnel is captured. Accordingly, obstacles in the traveling direction can be easily checked.

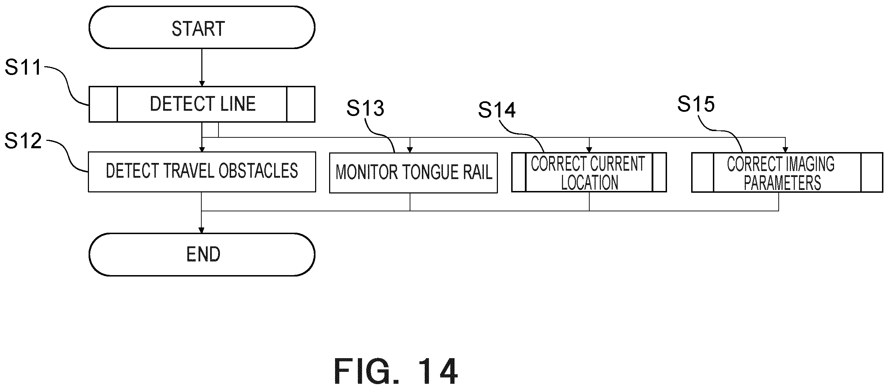

FIG. 14 is a flowchart illustrating a flow of general processing of the railroad-vehicle travel-line acquiring system 1. As illustrated in FIG. 14, first, the railroad-line information acquiring apparatus 20 checks a captured image that is captured by the image capturing device 10 on the basis of the location information of lines and detects line information in the captured image (Step S11).

Next, the obstacle detecting device 40 detects obstacles that will impede the railroad vehicle 5 during traveling, on the basis of the lines detected by the railroad-line information acquiring apparatus 20 and the captured image captured by the image capturing device 10 (Step S12).

Subsequently, when a set point corresponding to the most matched template that is selected by the mating portion 205 includes a tongue rail, the tongue-rail state monitor 209 determines the state of the tongue rail (Step S13).

Next, the travel-location-information collecting device 30 corrects the current location to be output from the travel-location-information collecting device 30, assuming the current location of the railroad vehicle 5 detected by the current location detector 207 as the correct current location (Step S14).

The parameter corrector 210 outputs a signal including information of parameters to the parameter setter 102 on the basis of the current location of the railroad vehicle 5 output from the current location detector 207 (Step S15), and the processing is ended.

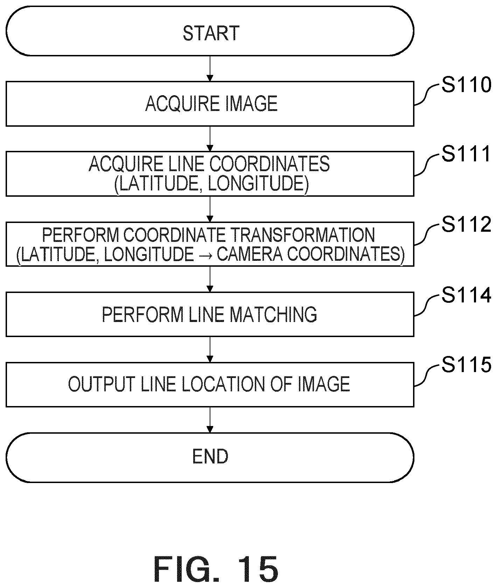

FIG. 15 is a flowchart illustrating a flow of detailed processing of the line detecting processing. As illustrated in FIG. 15, first, the image acquirer 201 acquires a captured image in the traveling direction of the railroad vehicle 5 from the image capturing portion 101 (Step S110).

Next, the scheduled-travel-line location acquirer 202 acquires location information of lines in the direction in which the railroad vehicle 5 travels from the travel-location-information collecting device 30 (Step S112).

Subsequently, the line coordinate transformer 203 transforms the captured image acquired by the image acquirer 20 and the location information of the lines into a common coordinate system (Step S113). In this example, the line coordinate transformer 203 transforms the captured image and the location information into the camera coordinate system.

Next, the matching portion 205 acquires location information of lines corresponding to the lines in the captured image, on the common coordinate system (Step S114).

The line output portion 206 then outputs location information of lines coinciding with the lines in the captured image compared by the matching portion 205 (Step S115), and the processing is ended.

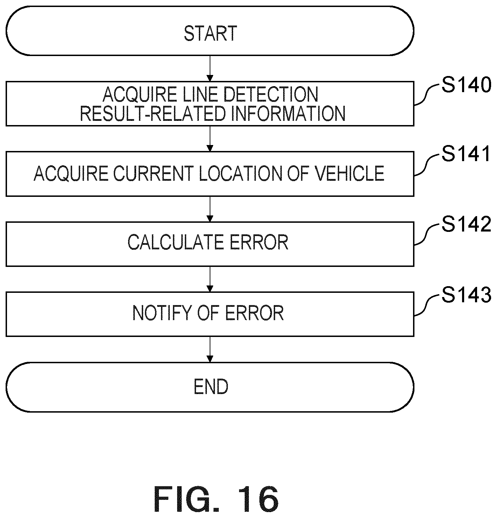

FIG. 16 is a flowchart illustrating a flow of detailed processing of the current location correcting processing. As illustrated in FIG. 16, first, the current location collector 301 acquires the current location of the railroad vehicle 5 output from the current location detector 207 as line detection result-related information (Step S140).

Next, the current location collector 301 acquires information of the current location of the railroad vehicle 5 on the basis of the GNSS (Global Navigation Satellite System) (Step S141).

Next, the travel-location-information collecting device 30 calculates an error between the current location of the railroad vehicle 5 output from the current location detector 207 and the current location of the railroad vehicle 5 based on the GNSS (Step S142).

Subsequently, when the error exceeds a predetermined value, the travel-location-information collecting device 30 corrects the output value on the basis of the current location of the railroad vehicle 5 output from the current location detector 207 and notifies of corrected information via the notifier 50 (Step S143), and the processing is ended.

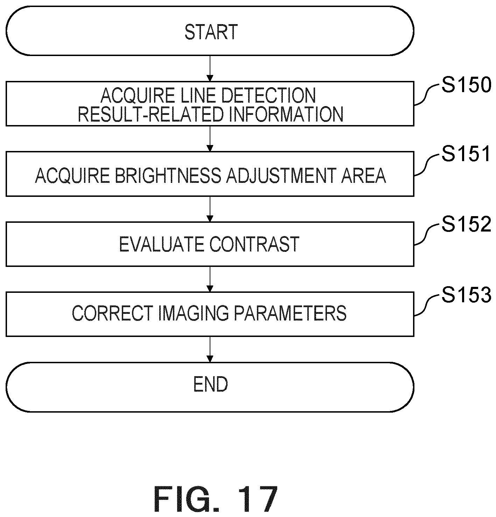

FIG. 17 is a flowchart illustrating a flow of detailed processing of the imaging parameter correcting processing. An example in which parameters are corrected using the contrast in the captured image as an evaluation value is explained below.

As illustrated in FIG. 17, first, the parameter corrector 210 acquires the current location of the railroad vehicle 5 output by the current location detector 207 and the location information of tunnels included in an imaging range from the current location, as line detection result-related information (Step S150).

Next, the parameter corrector 210 acquires information of a brightness adjustment area A130 that is associated with the location information of each of the tunnels (Step S151).

Subsequently, the parameter corrector 210 evaluates the contrast of the adjustment area A130 in the captured image (Step S151).

The parameter corrector 210 outputs an exposure parameter for causing the contrast to have a predetermined value to the parameter setter 102 (Step S143), and the processing is ended.

As described above, according to the present embodiment, the line coordinate transformer 203 transforms the location information of lines in a predetermined range on a geographical coordinate system, which is acquired in advance and a captured image on a camera coordinate system, which is obtained by imaging the predetermined range, into a common coordinate system and the matching portion 205 acquires location information of lines on the geographical coordinate system corresponding to lines in the captured image. Accordingly, the location information of a line in the captured image corresponding to the location information of the line on the geographical coordinate system, which is acquired in advance can be obtained. In this way, also when a line in a captured image on the camera coordinate system is not clearly imaged, transformation into the common coordinate system enables the location information of the line on the geographical coordinate system most matched as the whole line in the captured image to be acquired, and the location information of lines in the captured image can be more accurately acquired.

### (Second embodiment)

The railroad-vehicle travel-line acquiring system 1 according to a second embodiment is different from the railroad-vehicle travel-line acquiring system 1 according to the first embodiment in that an image projector 203b transforms a captured image of the camera coordinate system into the geographical coordinate system. Differences from the railroad-vehicle travel-line acquiring system 1 according to the first embodiment are described below.

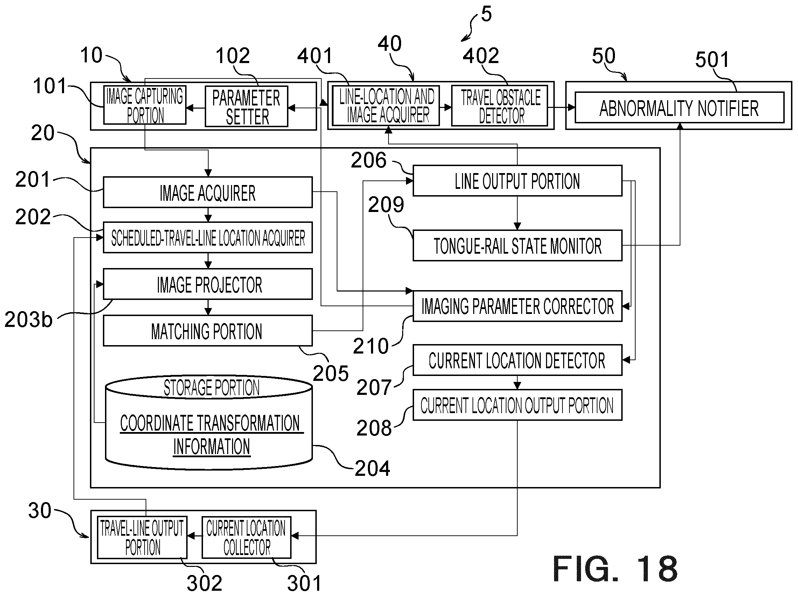

FIG. 18 is a block diagram illustrating a configuration of the railroad-vehicle travel-line acquiring system 1 according to the second embodiment. As illustrated in FIG. 18, the image projector 203b transforms a captured image on the camera coordinate system into the geographical coordinate system. The image projector 203b according to the present embodiment corresponds to a transformer.

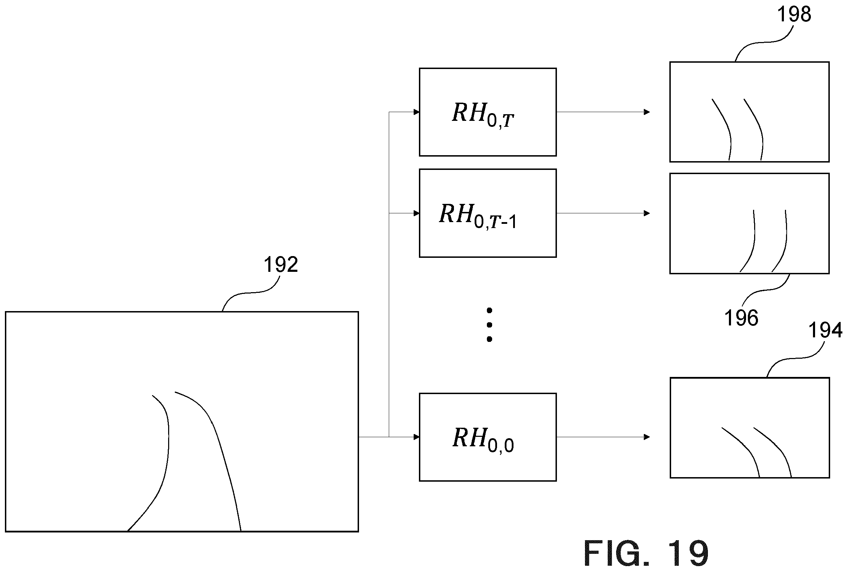

FIG. 19 is a diagram illustrating inverse transformation matrixes RH_{0,0} to RH_{0,T} of the homography matrixes H_{0,0} to H_{0,T} corresponding to the set point (POL, P0R). An image 192 of the camera coordinate system is an image captured at the reference location for the set point (POL, P0R). Accordingly, when the image projector 203b inversely transforms the image 192 with the inverse transformation matrix RH_{0,0}, a resultant image coincides with an image 194 of the geographical coordinate system corresponding to the set point (POL, P0R). On the other hand, when the image 192 is inversely transformed with the inverse transformation matrixes RH_{0,1} to RH_{0,T}, images 196 and 198 of non-existent line information of the geographical coordinate system are generated. In other words, when there is an image coinciding with an image of line information of the geographical coordinate system corresponding to the set point (POL, P0R) in the images 194, 196, and 198, this means that an image of a region corresponding to the image 194 has been captured from the distance corresponding to the inverse transformation matrix RH_{0,0} with which the inverse transformation into the coinciding image has been performed.

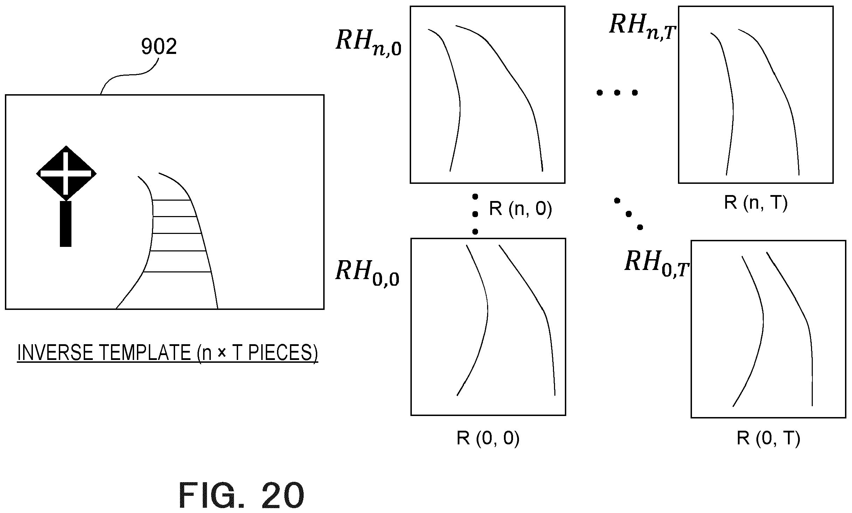

FIG. 20 is a diagram illustrating an example of inverse templates that are generated by the inverse coordinate transformation by the image projector 203b. FIG. 20 illustrates images obtained by inversely transforming the line information of the image 902 of the camera coordinate system with the inverse transformation matrixes RH_{0,0} to RH_{n,T} of the homography matrixes H_{0,0} to H_{n,T}, respectively. In the present embodiment, it is assumed that line information obtained by transformation into the geographical coordinate system (X, Y) with the inverse transformation matrix RH_{n,T} of the homography matrix is referred to as "inverse template R(n, T)". Considering a range in which the location of the railroad vehicle 5 includes an error, the image projector 203b generates inverse templates R(0, T) to R(n, T) respectively corresponding to the set points (POL, P0R) to (PnL, PnR) in a range in which the railroad vehicle 5 has a possibility of imaging.

The matching portion 205 selects an inverse template most matched with the line information of the geographical coordinate system corresponding to the set points (POL, P0R) to (PnL, PnR), for example, using the inverse templates R(0, T) to R(n, T) generated by inverse coordinate transformation with the inverse transformation matrix RH of the homography matrix illustrated in FIG. 20.

The line output portion 206 outputs the location information of lines of the geographical coordinate system in the most matched inverse template as the line location information in the captured image 902.

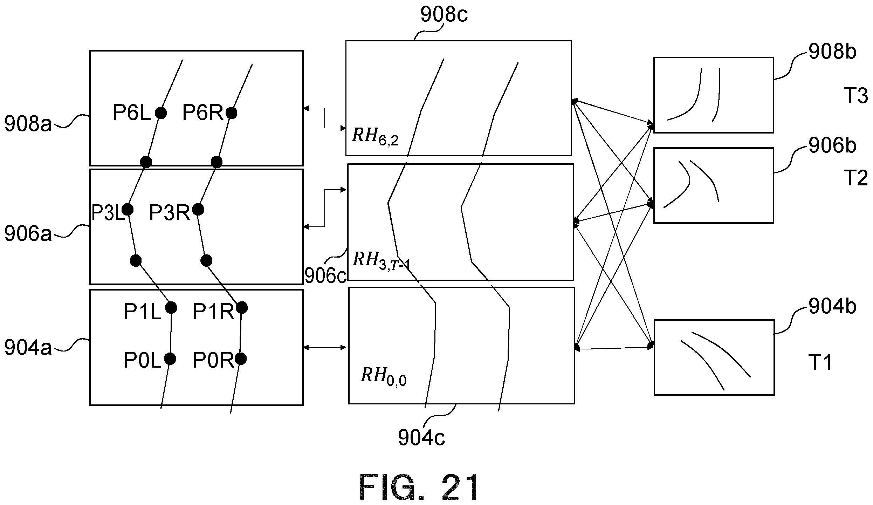

FIG. 21 is a diagram illustrating an example of processing of the line output portion 206. Images 904b to 908b are captured images that are captured at times T1 to T3, respectively, and images 904c to 908c indicate most matched inverse templates, respectively. For example, the image 904c corresponds to an inverse template generated by transformation with the inverse matrix RH_{0,0} corresponding to the set point (POL, P0R). That is, the line output portion 206 outputs line information of the geographical coordinate system (X, Y) corresponding to the set point (POL, P0R) with respect to the captured image 904b captured at the time T1.

Similarly, the image 906c corresponds to an inverse template generated by transformation with an inverse matrix RH_{3,T-1} corresponding to the set point (P3L, P3R). That is, the line output portion 206 outputs line information of the geographical coordinate system (X, Y) corresponding to the set point (P3L, P3R) with respect to the captured image 906b captured at the time T2.

Similarly, the image 908c corresponds to an inverse template generated by transformation with an inverse matrix RH_{6,2} corresponding to the set point (P6L, P6R). That is, the line output portion 206 outputs line information of the geographical coordinate system (X, Y) corresponding to the set point (P6L, P6R) with respect to the image 908b captured at the time T3.

The current location detector 207 detects a location corresponding to the inverse transformation matrix RH_{n,T} used in the transformation into the most matched inverse template by the processing in the matching portion 205, as the current location. For example, when an inverse template generated by transformation with the inverse matrix RH_{2,T-1} most matches with the image, the current location detector 207 detects the distance corresponding to T-1 as the current location of the railroad vehicle 5 with respect to the set point (P3L, P3R).

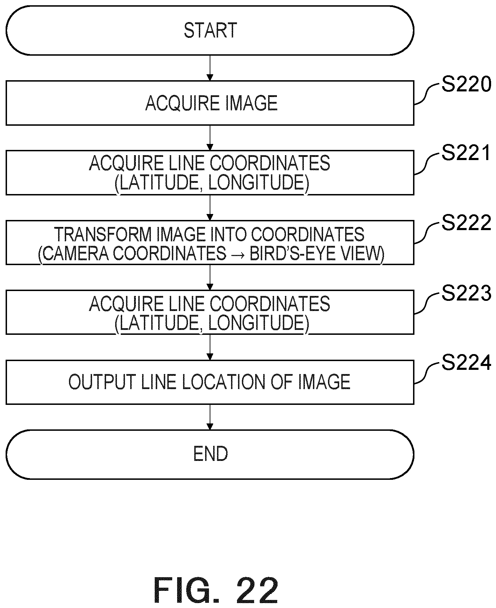

FIG. 22 is a flowchart illustrating a flow of detailed processing of the current location detecting processing according to the second embodiment. As illustrated in FIG. 21, first, the image acquirer 201 acquires a captured image in the traveling direction of the railroad vehicle 5 from the image capturing portion 101 (Step S220).

Next, the scheduled-trave-line location acquirer 202 acquires location information of lines in the direction in which the railroad vehicle 5 travels from the travel-location-information collecting device 30 (Step S221).

Subsequently, the image projector 203b transforms the captured image acquired by the image acquirer 20 and the location information of lines into a common coordinate system (Step S222). In this example, the image projector 203b transforms the captured image and the location information into the geographical coordinate system with the inverse transformation matrix RH of the homography matrix.

Subsequently, the matching portion 205 acquires location information of lines corresponding to the lines in the captured image, on the common coordinate system (Step S223).

The line output portion 206 outputs the location information of the lines (Step S223), and the entire processing is ended.

As described above, according to the present embodiment, the image projector 203b transforms a captured image of the camera coordinate system, obtained by imaging a predetermined range, into the geographical coordinate system and the matching portion 205 acquires location information of lines on the geographical coordinate system, that corresponds to lines in the captured image and that is acquired in advance. Accordingly, the location information of lines in a captured image corresponding to the location information of lines acquired in advance can be acquired.

### (Third embodiment)

The railroad-vehicle travel-line acquiring system 1 according to a third embodiment is different from the railroad-vehicle travel-line acquiring system 1 according to the first embodiment in that location information on the geographical coordinate system is stored as coordinates of three axes (X, Y, Z). Differences from the railroad-vehicle travel-line acquiring system 1 according to the first embodiment are described below.

The camera used by the image capturing portion 101 (see FIG. 2) is a stereo camera and an image on the camera coordinate system is also generated as coordinates of three axes (x, y, z).

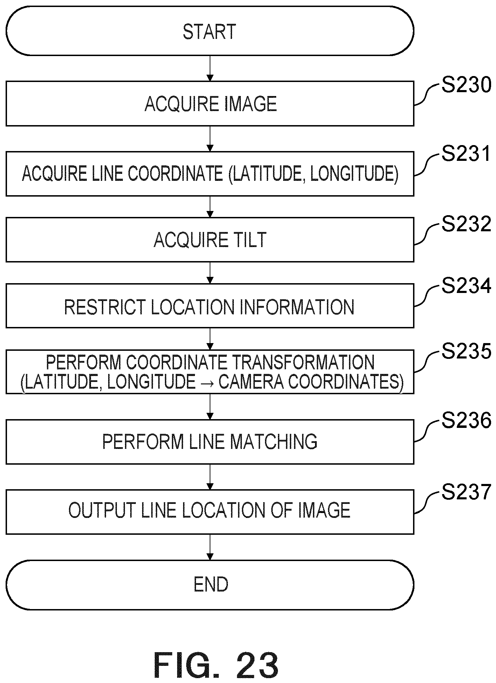

FIG. 23 is a flowchart illustrating a flow of detailed processing of line detecting processing according to the third embodiment. As illustrated in FIG. 23, first, the image acquirer 201 acquires a stereo captured image in the traveling direction of the railroad vehicle 5 from the image capturing portion 101 (Step S230).

Next, the scheduled-travel-line location acquirer 202 acquires location information of lines in the direction in which the railroad vehicle 5 travels from the travel-location-information collecting device 30 (Step S231).

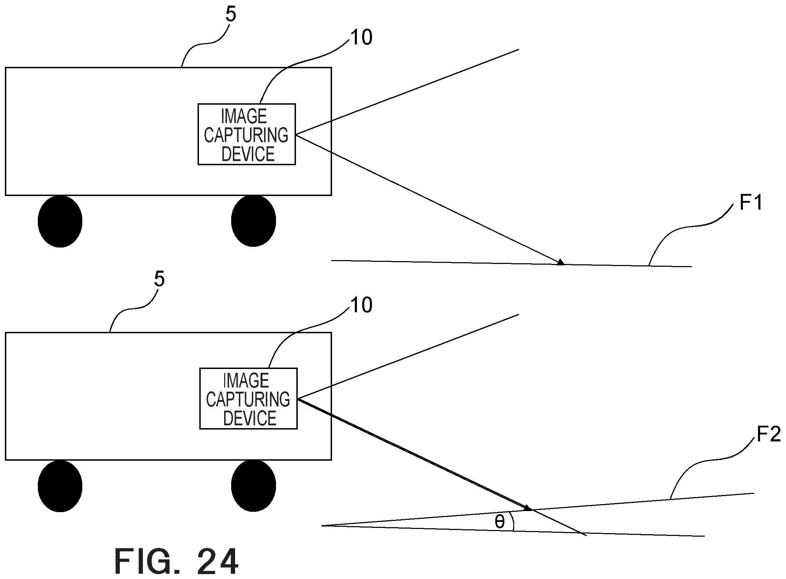

FIG. 24 is a diagram schematically illustrating an example in which the railroad vehicle 5 travels on a horizontal face F1 and a tilted face F2 at a tilt θ with respect to the horizontal face F1. As illustrated in FIG. 24, a z-coordinate value according to the tilt is allocated to each of pixels of a stereo image captured from the railroad vehicle 5 traveling on the tilted face F2. Accordingly, on the basis of coordinate information of the stereo captured image, the line coordinate transformer 203 can compute the tilt from the z-coordinate of the front side of the image and the z-coordinate of the back side thereof (Step S232).

The line coordinate transformer 203 restricts location information to that of lines having tilts in a predetermined range with respect to the computed tilt (Step S234), and transforms the captured image acquired by the image acquirer 20 and the location information of lines into a common coordinate system (Step S113). In this example, the line coordinate transformer 203 transforms the captured image and the location information into a camera coordinate system in a horizontal plane using altitude information as a value in the Z-axis direction. The image transformed into the camera coordinate system is a so-called bird's-eye view.

Next, the matching portion 205 acquires location information of lines corresponding to lines in the captured image, on the common coordinate system (Step S114). By transforming location information of lines different in the tilt into a bird's-eye view being a horizontal face, influences of the tilts are suppressed and the matching in the matching portion 205 can be performed more accurately.

The line output portion 206 outputs location information of lines coinciding with the lines in the captured image compared by the matching portion 205 (Step S115), and the processing is ended.

As described above, the line information on the geographical coordinate system of three axes is stored as (X, Y, Z) and a stereo captured image on the camera coordinate system of three axes is used. This enables the line coordinate transformer 203 to restrict previously-acquired location information of lines in a predetermined range, using tilt information of a stereo captured image. Accordingly, information is restricted when the matching portion 205 acquires location information of lines corresponding to lines in the captured image, and location information of lines in the captured image corresponding to previously-acquired location information of lines can be acquired more quickly and more accurately.

The novel embodiments described herein may be embodied in a variety of other forms, and various omissions, substitutions, and changes may be made without departing from the spirit of the invention. These embodiments and modifications thereof would fall within the scope and spirit of the invention, and would fall within the invention described in the accompanying claims and their equivalents.

## Claims

1. A railroad-line information acquiring apparatus comprising:
an image acquirer configured to acquire a captured image in a traveling direction of a railroad vehicle;
a line information acquirer configured to acquire location information of a first line in a direction in which the railroad vehicle travels, on a basis of a location of the railroad vehicle;
a transformer configured to transform the captured image and the first line into a common coordinate system; and
a comparator configured to acquire location information of the first line corresponding to a second line in the captured image, on the common coordinate system.

2. The apparatus of Claim 1, wherein the transformer transforms coordinates of the first line indicated by the location information into a coordinate system of an imaging device having captured the captured image.

3. The apparatus of Claim 1, wherein the transformer transforms a coordinate system of the captured image into a coordinate system of the first line.

4. The apparatus of any one of Claims 1 to 3, wherein the transformer transforms the captured image and the location information of the first line into a plurality of coordinate systems respectively corresponding to a plurality of distances.

5. The apparatus of any one of Claims 1 to 4, wherein
the captured image is an image being captured by a stereo camera and to which three-dimensional coordinates are allocated, and
transformation into a common coordinate system is performed on a basis of a coordinate system of the captured image and a coordinate system of the first line.

6. The apparatus of Claim 5, wherein
a tilt with respect to a traveling direction is computed using an image to which three-dimensional coordinates are allocated, and
transformation into the common coordinate system is performed on a basis of the tilt.

7. The apparatus of any one of Claims 1 to 4, wherein
the location information of the first line includes altitude information, and
the transformer transforms the location of the first line and a coordinate system of an image into a horizontal coordinate system using altitude information.

8. The apparatus of any one of Claims 1 to 7, further comprising a tongue-rail state monitor configured to monitor a state of a tongue rail at a line branch portion and check the state against travel line location information to confirm consistency in a tongue rail state.

9. The apparatus of Claim 2, further comprising a setter configured to set an imaging parameter of the imaging device on a basis of the location information of the first line obtained by the comparator.

10. The apparatus of Claim 9, wherein the setter sets an imaging parameter on a basis of a contrast in a predetermined region in a tunnel.

11. The apparatus of any one of Claims 1 to 10, further comprising a location detector configured to detect a current location on a basis of the line location acquired by the comparator.

12. A railroad-vehicle travel-line acquiring method comprising:
an image acquiring process of acquiring a captured image in a traveling direction of a railroad vehicle;
a line information acquiring process of acquiring location information of a first line in a direction in which the railroad vehicle travels, on a basis of a location of the railroad vehicle;
a transforming process of transforming the captured image and the first line into a common coordinate system; and
a comparing process of acquiring location information of the first line corresponding to a line in the captured image, on the common coordinate system.
